# EUROPÄISCHE PATENTSCHRIFT

(11) **EP 3 091 253 B1**
(45) Veröffentlichungstag und Bekanntmachung des Hinweises auf die Patenterteilung: **01.04.2020**
(21) Anmeldenummer: 16168082.2
(22) Anmeldetag: 03.05.2016
(51) Int. Cl.: F16H 37/04, F16H 3/00

(54) **GETRIEBEANORDNUNG**
GEARBOX ASSEMBLY
SYSTÈME D'ENGRENAGE

(30) Priorität: 04.05.2015 DE 102015208164
(43) Veröffentlichungstag der Anmeldung: 09.11.2016
(73) Patentinhaber: Deere & Company, Moline, IL 61265 (US)
(72) Erfinder: Raisch, Stefan, 71665 Vaihingen/Enz (DE); Müller, David, 76297 Stutensee (DE)
(74) Vertreter: Dehnhardt, Florian Christopher

(56) Entgegenhaltungen:
- EP-A1- 0 797 025
- DE-A1-102005 030 987
- JP-A- 2008 180 255

## Beschreibung

Die Erfindung betrifft eine Getriebeanordnung, insbesondere für ein landwirtschaftliches Arbeitsfahrzeug, mit einem Parallelschaltgetriebe mit einer Eingangswelle, von der ausgehend eine Antriebsleistung jeweils über ein erstes und ein zweites Schaltelement auf jeweilige Vorgelegewellen verteilt werden kann, und einer ersten und einer zweiten koaxial zueinander angeordneten Ausgangswelle, wobei von jeder der Vorgelegewellen die Antriebsleistung bedarfsweise auf jede der Ausgangswellen übertragbar ist, und einem Gruppenschaltgetriebe mit mehreren Schaltgruppen.

EP 0797025 A1 zeigt eine Getriebeanordnung nach dem Oberbegriff des Anspruchs 1.

Bei landwirtschaftlichen Arbeitsfahrzeugen, beispielsweise Traktoren, haben Getriebeanordnungen aufgrund des sehr breiten Einsatzbereichs des Fahrzeugs sehr unterschiedliche Fahrbereiche abzudecken. Dies erfordert eine entsprechend große Spreizung zwischen der langsamsten und der schnellsten Übersetzungsstufe der Getriebeanordnung. Hier ist "langsam" und "schnell" auf die resultierende Fahrgeschwindigkeit des Fahrzeugs bezogen. Getriebeanordnungen für landwirtschaftliche Arbeitsmaschinen weisen zudem regelmäßig kleine geometrische Stufensprünge zwischen den einzelnen Übersetzungsstufen auf, so dass in Kombination mit der großen Spreizung eine hohe Anzahl an Gängen die Folge ist. Diese hohe Anzahl an Gangstufen lässt sich bei Getriebeanordnungen für landwirtschaftliche Arbeitsmaschinen durch eine Gruppenbauweise mit einem vertretbaren Aufwand realisieren.

Ein möglicher Aufbau einer Getriebeanordnung für ein landwirtschaftliches Arbeitsfahrzeug besteht aus einem Hauptschaltgetriebe, einem nachgeschalteten Gruppenschaltgetriebe und einem Wendegetriebe, auch Reversiereinheit genannt. Üblicherweise wird ein enggestuftes Hauptschaltgetriebe eingesetzt, dessen Gangstufen lastschaltbar ausgeführt sind, und ein Gruppenschaltgetriebe nachgeschaltet, dessen Schaltgruppen allerdings nicht lastschaltbar sind. Bei einer derartigen Getriebeanordnung kann ein Gangwechsel des Hauptschaltgetriebe innerhalb einer Schaltgruppe des Gruppenschaltgetriebes lastgeschaltet, das heißt ohne Zugkraftunterbrechung, durchgeführt werden. Ist es allerdings erforderlich einen Wechsel der Schaltgruppe des Gruppenschaltgetriebes vorzugnehmen, ist dies nicht ohne eine Zugkraftunterbrechung möglich. Eine derartige Getriebeanordnung zeigt die DE 10 2010 029597 A1, bei der das Hauptschaltgetriebe als sogenanntes Parallelschaltgetriebe ausgeführt ist.

In der Praxis ist es nun so, dass beispielsweise bei einem Gruppenschaltgetriebe mit drei Schaltgruppen A, B und C eine Lastschaltbarkeit zwischen den Schaltgruppen B und C den Fahrkomfort in einem deutlichen und ausreichenden Maße steigern würde und gleichzeitig die Anforderung an ein zugkraftunterbrechungsfreies Schalten in diesem Fahrgeschwindigkeitsbereich erfüllen würde. Hierbei stellt die Schaltgruppe A eine langsame Übersetzungsstufe und die Schaltgruppe C eine schnelle Übersetzungsstufe bereit.

Die Aufgabe der vorliegenden Erfindung besteht nun darin eine Getriebeanordnung bereitzustellen, die den oben genannten Anforderungen teilweise oder vollständig gerecht wird.

Die Aufgabe wird gelöst durch eine Getriebeanordnung, insbesondere für ein landwirtschaftliches Arbeitsfahrzeug, umfassend ein Parallelschaltgetriebe mit einer Eingangswelle, von der ausgehend eine Antriebsleistung jeweils über ein erstes und ein zweites Schaltelement auf jeweilige Vorgelegewellen verteilt werden kann, und einer ersten und einer zweiten koaxial zueinander angeordneten Ausgangswelle, wobei von jeder der Vorgelegewellen die Antriebsleistung bedarfsweise auf jede der Ausgangswellen übertragbar ist, ein Gruppenschaltgetriebe mit mehreren Schaltgruppen, wobei eine erste der Schaltgruppen mit der ersten der Ausgangswellen und eine zweite der Schaltgruppen mit der zweiten der Ausgangswellen antriebsverbindbar ist.

Durch die erfindungsgemäße Ausgestaltung wird eine Lastschaltbarkeit von Schaltgruppen des Gruppenschaltgetriebes dadurch erreicht, dass eine der Schaltgruppen über die eine der Ausgangswellen und eine weitere der Schaltgruppen über die andere der Ausgangswellen angetrieben werden kann. Da die Ausgangswellen ihrerseits in eine Antriebsverbindung mit den Vorgelegewellen gebracht werden können und somit über die zwei Schaltelemente bedarfsweise und abwechselnd in einen Kraftflusspfad geschaltet werden können, kann die Schaltgruppe, die der gerade nicht im Kraftflusspfad befindlichen Ausgangswelle zugeordnet ist, bereits vorselektiert werden und zwar indem die Schaltgruppe mit dieser Ausgangswelle in eine Antriebsverbindung gebracht wird. Bevorzugt ist eine erste Schaltstelle mit mehreren Schaltstellungen vorgesehen, wobei in einer der Schaltstellungen beide Ausgangswellen antriebsmäßig miteinander verbunden sind. Hierdurch ist für einen Teil der Schaltgruppen alle durch das Hauptschaltgetriebe zur Verfügung gestellte Gangstufen nutzbar. In der einfachsten Ausgestaltung weist die Schaltstelle lediglich eine weitere Schaltstellung auf, in der beide Antriebswellen nicht miteinander gekoppelt sind.

Bevorzugt ist eine zweite Schaltstelle mit mehreren Schaltstellungen vorgesehen, wobei in einer der Schaltstellungen eine der Schaltgruppen des Gruppenschaltgetriebes mit einer der Ausgangswellen antriebsmäßig verbunden ist. Hierdurch kann bedarfsweise eine Antriebsverbindung zwischen der Ausgangswelle und der Schaltgruppe hergestellt werden.

Bevorzugt sind die erste und/oder die zweite Schaltstelle in dem Gruppenschaltgetriebe angeordnet. Hierdurch kann gegebenenfalls auf ein bereits in dem Gruppenschaltgetriebe bestehenden Schaltelement und dessen Ansteuerung zurückgegriffen werden.

Bevorzugt sind die erste und die zweite Schaltstelle zu einer Doppelschaltstelle mit zwei Schaltstellungen zusammengefasst, wobei in der ersten Schaltstellung beide Ausgangswellen antriebsmäßig miteinander verbunden sind und in der zweiten Schaltstellung eine der Schaltgruppen des Gruppenschaltgetriebes mit einer der Ausgangswellen antriebsmäßig verbunden ist. Durch das Zusammenfassen beider Schaltstellen zu einer Schaltstelle ergeben sich ein reduzierter Bauraumbedarf und eine vereinfachte Aktuierung der Schaltstelle.

Bevorzugt weist das Parallelschaltgetriebe über die erste Vorgelegewelle schaltbare erste Übersetzungen und über die zweite Vorgelegewelle schaltbare zweite Übersetzungen auf, wobei eine erste Übersetzung mit einer zweiten Übersetzung jeweils in einer Schaltebene angeordnet ist und zumindest eine erste Schaltebene über die erste Ausgangswelle und zumindest eine zweite Schaltebene über die zweite Ausgangswelle abgetrieben wird. Durch die Anordnung in Schaltebenen kann eine axial kurze Bauform erreicht werden.

Bevorzugt sind die erste und die zweite Ausgangswelle jeweils mit einer ersten Hauptwelle und einer zweiten Hauptwelle des Gruppenschaltgetriebes antriebsverbunden. Hierbei kann zwischen der Ausgangswelle und der entsprechende Hauptwelle des Gruppenschaltgetriebes eine trennbare Schnittstelle, beispielsweise in Form einer steckbaren Längsverzahnungsverbindung, vorgesehen sein. Bevorzugt sind die erste und die zweite Schaltstelle auf einer der beiden Hauptwellen des Gruppenschaltgetriebes angeordnet.

Die erfindungsgemäße Getriebeanordnung wird anhand der nachfolgenden Figuren beschrieben. Hierin zeigen
- Figur 1: ein landwirtschaftliches Arbeitsfahrzeug mit einem Antriebsstrang, der eine erfindungsgemäßen Getriebeanordnung umfasst;
- Figur 2: ein Blockschaltbild einer erfindungsgemäßen Getriebeanordnung in einer ersten Ausführungsform;
- Figur 3: ein Strichdiagramm der Getriebeanordnung in der ersten Ausführungsform;
- Figur 4: eine Schaltmatrix der Getriebeanordnung in der ersten Ausführungsform;
- Figur 5: ein Strichdiagramm der Getriebeanordnung in der ersten Ausführungsform mit Kraftflüssen vor und nach einer Lastschaltung;
- Figur 6: ein Strichdiagramm der Getriebeanordnung in der ersten Ausführungsform mit weiteren schaltbaren Übersetzungen;
- Figur 7: ein Strichdiagramm der Getriebeanordnung in einer zweiten Ausführungsform;
- Figur 8: ein Strichdiagramm der Getriebeanordnung in der zweiten Ausführungsform mit Kraftflüssen vor und nach einer Lastschaltung und
- Figur 9: ein Strichdiagramm der Getriebeanordnung in der zweiten Ausführungsform mit weiteren schaltbaren Übersetzungen.

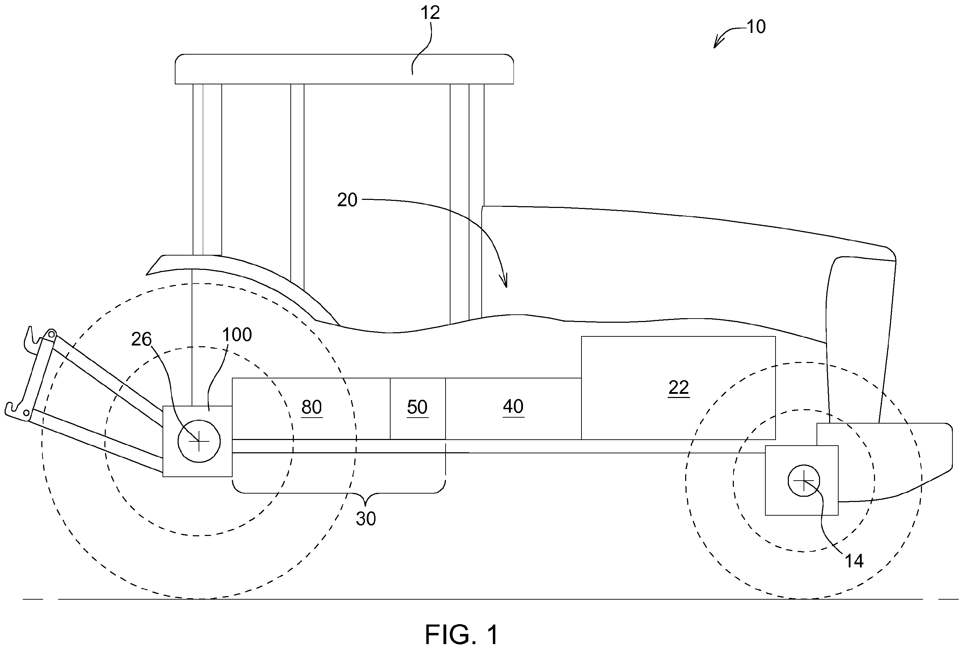

Die Figur 1 zeigt ein landwirtschaftliches Arbeitsfahrzeug 10 in Gestalt eines Traktors mit einem Antriebsstrang 20 in einer möglichen Ausgestaltung. Das Arbeitsfahrzeug 10 umfasst ferner eine Kabine 12, eine vordere Fahrzeugachse 14 und eine hintere Fahrzeugachse 26. Die vordere Fahrzeugachse 14 und die hintere Fahrzeugachse 26 sind Teil des Antriebsstrangs 20, wobei die hintere Fahrzeugachse 26 in der Regel permanent und die vordere Fahrzeugachse 14 in der Regel bedarfsweise zuschaltbar angetrieben werden.

Der Antriebsstrang 20 umfasst ferner einen Antriebsmotor 22, der als Verbrennungskraftmaschine ausgeführt sein kann, und eine Getriebestruktur, die, wie nachfolgend beschrieben, aus verschiedenen einzelnen Getriebekomponenten zusammengesetzt sein kann. In der vorliegend beschriebenen Getriebestruktur kann im Kraft- und Momentenfluss ausgehend von dem Antriebsmotor 22 ein Wendegetriebe 40, ein Hauptschaltgetriebe 50, ein Gruppenschaltgetriebe 80 und ein Differentialgetriebe 100 vorgesehen sein. Bei der Einheit bestehend aus dem Hauptschaltgetriebe 50 und dem Gruppenschaltgetriebe 80 handelt es sich um die erfindungsgemäße Getriebeanordnung, die mit dem Bezugszeichen 30 versehen ist. Das Hauptschaltgetriebe 50 ist als Parallelschaltgetriebe ausgeführt. Auf eine Darstellung des Abtriebs des bedarfsweise zuschaltbaren Vorderradantriebs aus dem Gruppenschaltgetriebe 80 wurde verzichtet.

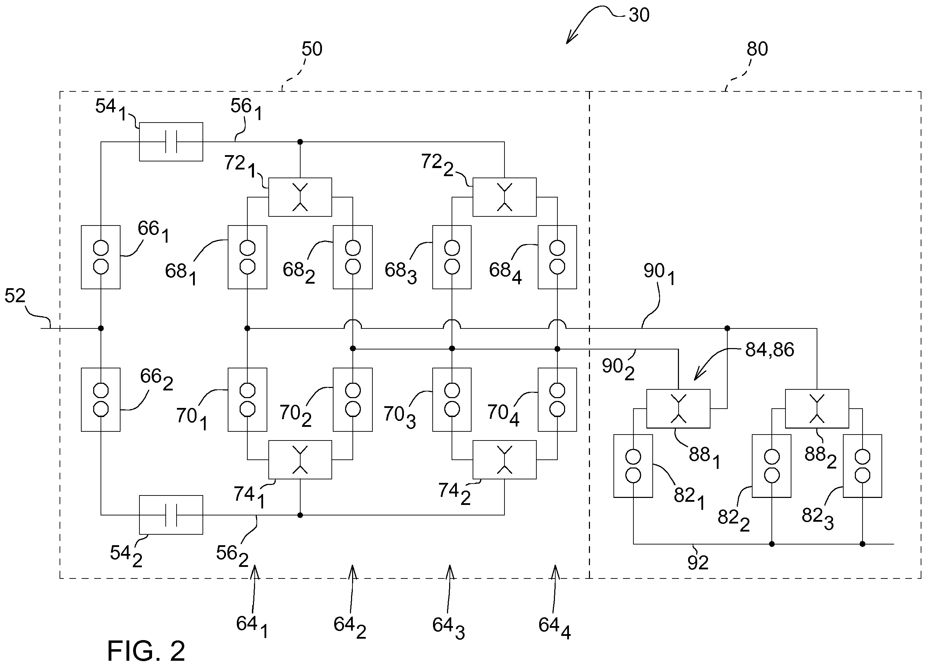

Die Figur 2 zeigt ein Blockschaltbild einer erfindungsgemäßen Getriebeanordnung 30 in einer ersten Ausführungsform. Die Getriebeanordnung 30 umfasst ein Hauptschaltgetriebe in Form eines Parallelschaltgetriebes 50 und ein Gruppenschaltgetriebe 80 mit vorliegend drei Schaltgruppen 82₁, 82₂, 82₃. Sowohl das Parallelschaltgetriebe 50 als auch das Gruppenschaltgetriebe 80 können, wie vorliegend dargestellt, in Vorgelegebauweise ausgeführt sein.

Das Parallelschaltgetriebe 50 weist eine durch den in Figur 1 dargestellten Antriebsmotor 22 angetriebene Eingangswelle 52 auf, von der ausgehend die Antriebsleistung über zwei Stirnradstufen 66₁, 66₂ an jeweilige Schaltelemente 54₁, 54₂ verteilt werden kann, wobei die Schaltelemente 54₁, 54₂ ihrerseits Vorgelegewellen 56₁, 56₂ in eine Antriebsverbindung mit den Stirnradstufen 66₁, 66₂ bringen können. Ausgehend von den Vorgelegewellen 56₁, 56₂ kann die Antriebsleistung über jeweilige Stirnradstufen 68, 70 auf einen Abtrieb des Parallelschaltgetriebe 50 übertragen werden, wobei der Abtrieb durch zwei Ausgangswellen 58₁, 58₂ gebildet wird. In einer möglichen konkreten Ausgestaltung sind der Vorgelegewelle 56₁ die Stirnradstufen 68₁ bis 68₄ und der Vorgelegewelle 56₂ die Stirnradstufen 70₁ bis 70₄ zugeordnet. Hierbei können jeweilige Losräder der Stirnradstufen 68₁ bis 70₄ auf den Vorgelegewellen 56₁, 56₂ gehalten sein und mittels Doppelschaltstellen 72₁, 72₂, 74₁, 74₂ in eine Antriebsverbindung mit der jeweiligen Vorgelegewelle 56₁, 56₂ gebracht werden. Auf den Vorgelegewellen 56₁, 56₂ sich gegenüberliegende Stirnradstufen sind in Schaltebenen 64₁ bis 64₄ angeordnet. Somit sind die Stirnradstufen 68₁, 70₁ in der Schaltebene 64₁, die Stirnradstufen 68₂, 70₂ in der Schaltebene 64₂, die Stirnradstufen 68₃, 70₃ in der Schaltebene 64₃ und die Stirnradstufen 68₄, 70₄ in der Schaltebene 64₄ angeordnet. Bei der in der Figur 2 gezeigten Ausführungsform treiben die erste Schaltebene 64₁ über die erste Ausgangswelle 58₁ und die restlichen Schaltebenen 64₂, 64₃, 64₄ über die zweite Ausgangswelle 58₂ ab.

Das Gruppenschaltgetriebe 80 weist zwei durch die Ausgangswellen 58₁, 58₂ des Parallelschaltgetriebes 50 angetriebene Hauptwellen 90₁, 90₂ auf, von denen ausgehend die Antriebsleistung über drei als Stirnradstufen ausgebildete Schaltgruppen 82₁, 82₂, 82₃ auf eine Abtriebswelle 92 übertragen werden kann. Hierbei können jeweilige Losräder der Schaltgruppen 82₁, 82₂, 82₃ auf den Hauptwellen 90₁, 90₂ gehalten sein und mittels Doppelschaltstellen 88₁, 88₂ in eine Antriebsverbindung mit der jeweiligen Hauptwelle 90₁, 90₂ gebracht werden. Bei der in der Figur 2 gezeigten Ausführungsform wird die Schaltgruppe 82₁ von der zweiten Hauptwelle 90₂ und die Schaltgruppen 82₂, 82₃ von der ersten Hauptwelle 90₁ angetrieben. Während die Doppelschaltstelle 88₂ dazu dient, wahlweise eine der beiden Schaltgruppen 82₂, 82₃ mit der ersten Hauptwelle 90₁ zu verbinden, ist die Doppelschaltstelle 88₁ dafür vorgesehen, in einer ersten Schaltstellung die Schaltgruppe 88₁ mit der zweiten Hauptwelle 90₂ oder bei Hauptwellen 90₁, 90₂ untereinander antriebsmäßig zu verbinden. In einer alternativen Ausgestaltung dieser Ausführungsform kann die Doppelschaltstelle 88₁ als zwei einzelne Schaltstellen 84, 86 ausgeführt sein.

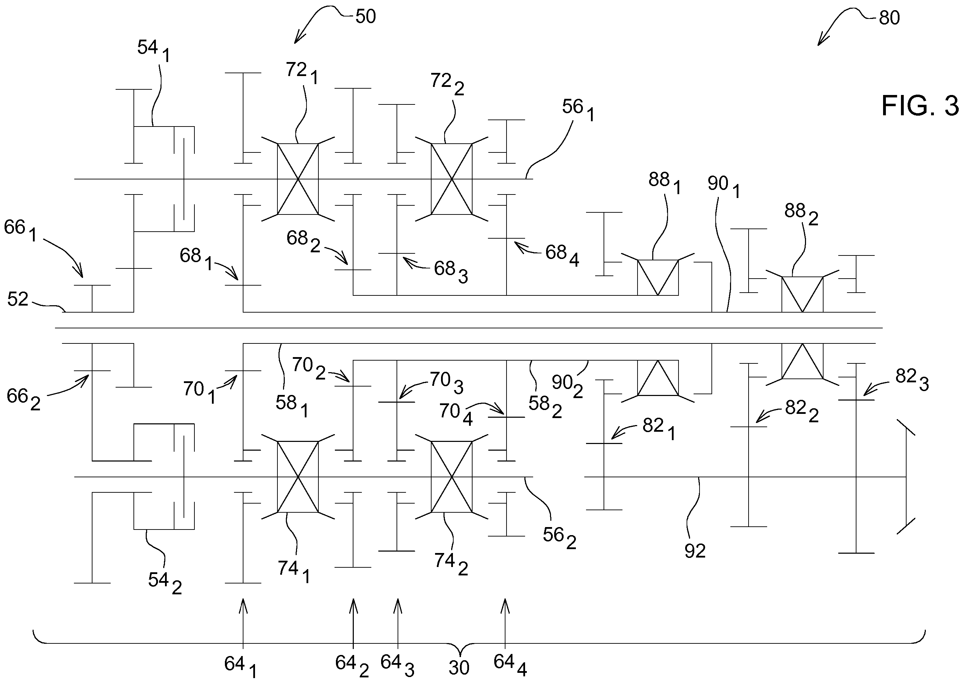

Die Figur 3 zeigt ein Strichdiagramm der Getriebeanordnung 30 in der zuvor beschriebenen Ausführungsform. Auf der Vorgelegewelle 56₁ des Parallelschaltgetriebes 50 sind die ungerade Gangstufen 1, 3, 5 und 7 gehalten, wobei in der ersten Schaltebene 64₁ die Gangstufe 7 und in der vierten Schaltebene 64₄ die Gangstufe 1 angeordnet ist. Auf der Vorgelegewelle 56₂ sind die gerade Gangstufen 2, 4, 6 und 8 gehalten, wobei in der ersten Schaltebene 64₁ die Gangstufe 8 und in der vierten Schaltebene 64₄ die Gangstufe 2 angeordnet ist. Die beiden Ausgangswellen 58₁, 58₂ sind coaxial zueinander angeordnet, wobei die erste Ausgangswelle 58₁ innerhalb der zweiten Ausgangswelle 58₂ gehalten ist. Die Anordnung der Schaltgruppen 82₁, 82₂, 82₃ ist derart getroffen, dass es sich bei der Schaltgruppe 82₃ um diejenige mit der kürzesten Übersetzung und bei der Schaltgruppe 82₁ um diejenige mit der längsten Übersetzung handelt. Die Schaltgruppen 82₁, 82₂, 82₃ können in dieser Reihenfolge auch mit C, B und A bezeichnet werden.

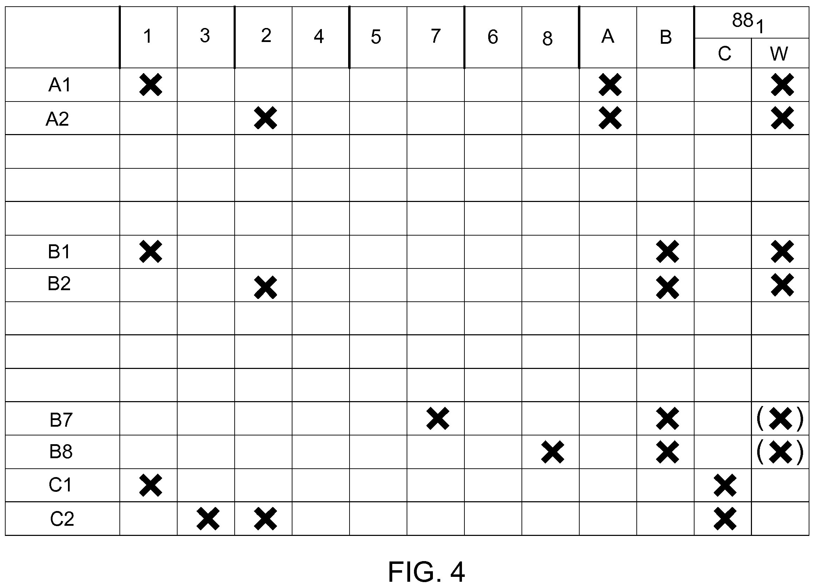

Die Figur 4 zeigt eine Schaltmatrix der über die Figuren 2 und 3 beschriebenen Ausführungsform der Getriebeanordnung 30. Die Schaltmatrix gibt lediglich die wichtigsten Schaltzustände wieder. In den Spalten der Schaltmatrix sind zunächst die 8 Gangstufen des Parallelschaltgetriebes 50 aufgeführt. Anschließend sind 3 Schaltgruppen A, B, C des Gruppenschaltgetriebes 80 aufgeführt. Schließlich ist in der letzten Spalte derjenige Schaltzustand der Doppelschaltstelle 88₁ aufgeführt, in dem die Doppelschaltstelle 88₁ beide Hauptwellen 90₁, 90₂ antriebsmäßig miteinander verbindet. Wie der Schaltmatrix zu entnehmen ist, befindet sich die Doppelschaltstelle 88₁ durchgängig in dem Schaltzustand, in dem beide Hauptwellen 90₁, 90₂ antriebsmäßig miteinander verbunden sind, während die Gangstufen 1 bis 8 des Parallelschaltgetriebes 50 und die Schaltgruppen A, B des Gruppenschaltgetriebes 80 durchlaufen werden. Lediglich die Übersetzungen B7 und B8 erfordern nicht den beschriebenen Schaltzustand der Doppelschaltstelle 88₁. Weiterhin ist der Schaltmatrix zu entnehmen, dass die Übersetzung C1 und C2, das heißt Kombinationen aus der Schaltgruppe C und den Gangstufen 1 und 2, zu erreichen sind, wenn die Doppelschaltstelle 88₁ sich in dem Schaltzustand befindet, in dem das Losrad der Schaltgruppe 82₁ mit der zweiten Hauptwelle 90₂ antriebsverbunden ist. Lediglich die Kombinationen aus der Schaltgruppe C und den Gangstufen 7 und 8 sind bei diesem Ausführungsbeispiel der Getriebeanordnung 30, bei der die Doppelschaltstelle 88₁ als eine integrierte Schaltstelle ausgeführt ist, nicht schaltbar. Hierzu ist allerdings die zuvor bereits beschriebene alternative Ausgestaltung mit zwei einzelnen und getrennt schaltbaren Schaltstellen 84, 86 in der Lage.

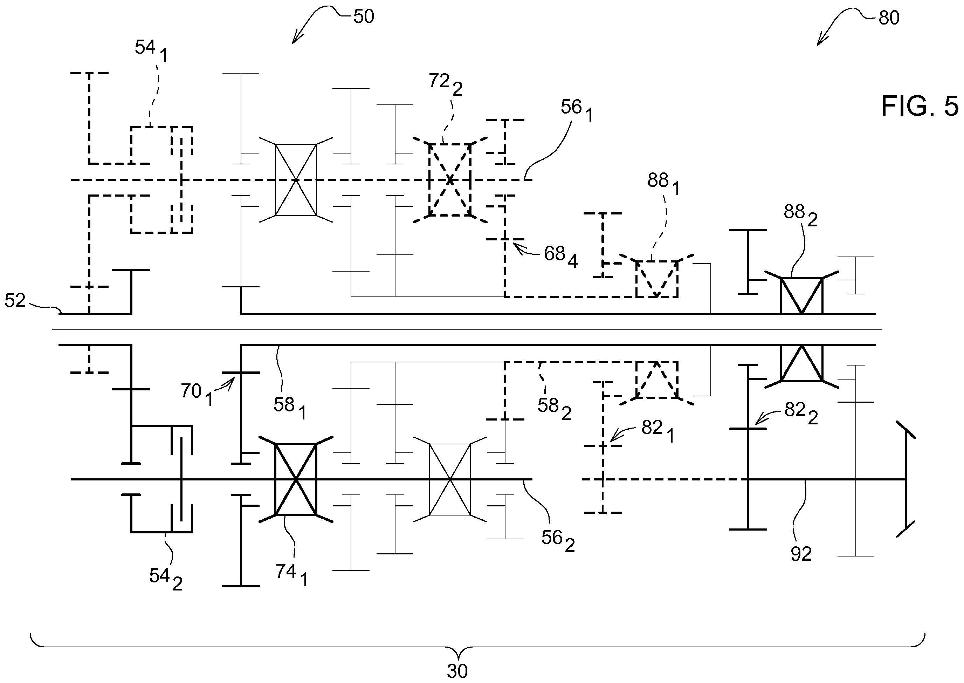

Anhand der Figur 5 wird nachfolgend eine Lastschaltung von der Übersetzung B8 in der Übersetzung C1 beschrieben. Die in der Figur 5 dargestellte Getriebeanordnung 30 entspricht der in der Figur 4 erläuterten, insofern nur die relevanten Bezugszeichen in die Figur 5 eingezeichnet sind. Die zunächst eingestellte Übersetzung ist B8, deren Kraftfluss in der Figur 5 mit dick-durchgezogenem Strich dargestellt ist. Der Kraftfluss verläuft von der Eingangswelle 52 über das Schaltelement 54₂ auf die Vorgelegewelle 56₂. Über die entsprechend positionierte Schaltstelle 74₁ erfolgt ein Abtrieb über die Stirnradstufe 70₁, welche der Gangstufe 8 des Parallelschaltgetriebes 50 entspricht, auf die erste Ausgangswelle 58₁ und weiter in das Gruppenschaltgetriebe 80. Wiederum über die entsprechend positionierte Schaltstelle 88₂ erfolgt ein Kraftfluss über die Schaltgruppe 82₂ beziehungsweise B auf die Abtriebswelle 92. Weiterhin ist in der Figur 5 mit dickgestricheltem Strich die vorselektierte beziehungsweise einzustellende Übersetzung C1 dargestellt. Hierfür ist das Schaltelement 54₁ geöffnet und über die entsprechend positionierte Schaltstelle 72₂ und die Stirnradstufe 68₄, welche der Gangstufe 1 des Parallelschaltgetriebes 50 entspricht, steht die Vorgelegewelle 56₁ mit der zweiten Ausgangswelle 58₂ in einer Antriebsverbindung, so dass eine antriebsmäßige Verbindung mit dem Gruppenschaltgetriebe 80 besteht. Dort besteht über die entsprechend positionierte Schaltstelle 88₁ eine Antriebsverbindung über die Schaltgruppe 82₁ beziehungsweise C auf die Abtriebswelle 92. Der eben beschriebene Strang wird somit ausgehend von der Abtriebswelle 92 rückwärts bis zu dem getrennten Schaltelement 54₁ mitgeschleppt. Eine Lastschaltung zwischen der momentanen Übersetzung B8 und der einzustellenden Übersetzung C1 erfolgt dadurch, dass die beiden Schaltelemente 54₁ und 54₂ zeitgleich und entgegengesetzt aktuiert werden und zwar indem das Schaltelement 54₂ geöffnet und das Schaltelement 54₁ geschlossen werden. In Abwandlung hierzu kann zunächst die Übersetzung B7 eingestellt sein. Hierbei verläuft dann der Kraftfluss zunächst über das Schaltelement 54₁ auf die Vorgelegewelle 56₁, dann weiter über die entsprechend positionierte Schaltstelle 72₁ und über die Stirnradstufe 68₁, welche der Gangstufe 7 des Parallelschaltgetriebes 50 entspricht, ebenfalls auf die erste Ausgangswelle 58₁. Eine Lastschaltung erfolgt dann, indem das Schaltelement 54₁ geöffnet und das Schaltelement 54₂ geschlossen werden. In weiterer Abwandlung hierzu kann eine Lastschaltung ebenfalls ausgehend von den Übersetzungen B7 oder B8 in eine der Übersetzungen C2 bis C6 erfolgen. Hierzu ist es lediglich auf der jeweils vorselektierten Vorgelegewelle 56₁, 56₂ eine der Stirnradstufen 68₂, 68₃, 70₂, 70₃, 70₄ zu schalten.

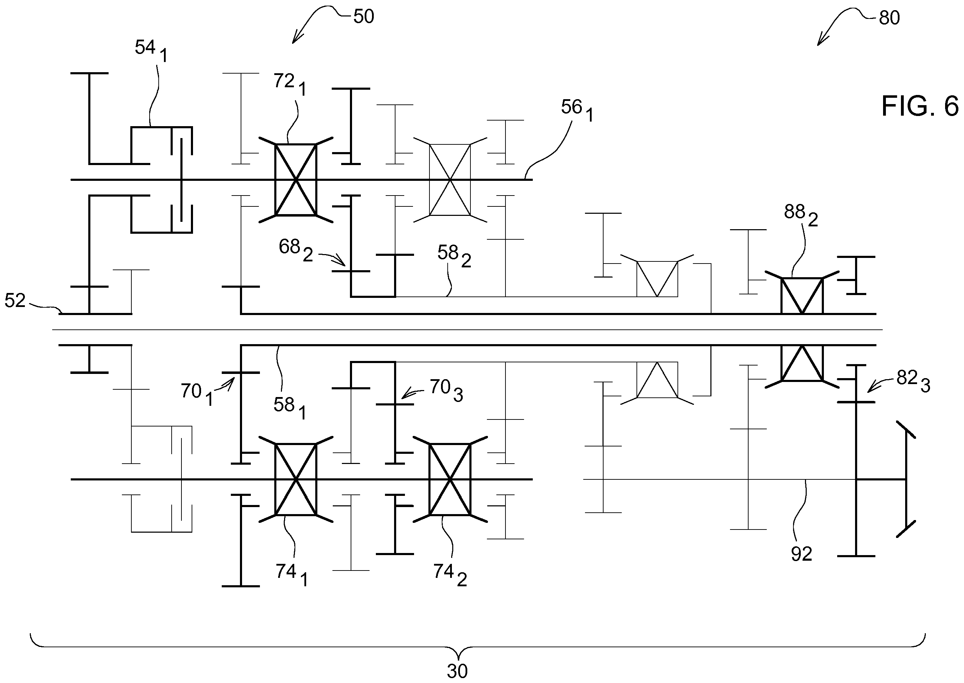

Die Figur 6 zeigt, wiederum mit dick-durchgezogenem Strich dargestellt, die Getriebeanordnung 30 mit einer eingestellten Übersetzung A9, die durch eine Windung des

Kraftflusses durch das Parallelschaltgetriebe 50 zustande kommt. Der Kraftfluss verläuft von der Eingangswelle 52 über das Schaltelement 54₁ auf die Vorgelegewelle 56₁. Über die entsprechend positionierte Schaltstelle 72₁ erfolgt über die Stirnradstufe 68₂ und die Abtriebswelle 58₂ ein Antrieb der Stirnradstufe 70₃, die über die entsprechend positionierte Schaltstelle 74₂ die gegenüberliegende Vorgelegewelle 56₂ antreibt. Ausgehend von der Vorgelegewelle 56₂ verläuft der Kraftfluss über die entsprechend positionierte Schaltstelle 74₁ und über die Stirnradstufe 70₁ auf die Abtriebswelle 58₁ und weiter in das Gruppenschaltgetriebe 80. Dort besteht über die entsprechend positionierte Schaltstelle 88₂ eine Antriebsverbindung über die Schaltgruppe 82₃ beziehungsweise A auf die Abtriebswelle 92, wodurch die Übersetzung A9 eingestellt ist. In Abwandlung hierzu kann eine Übersetzung B9 eingestellt werden, indem über die entsprechend positionierte Schaltstelle 88₂ eine Antriebsverbindung über die Schaltgruppe 82₂ beziehungsweise B auf die Abtriebswelle 92 eingestellt ist. Weiterhin in Abwandlung hierzu können die Übersetzungen A10 und B10 eingestellt werden, indem der Kraftfluss in dem Parallelschaltgetriebe 50 anstatt über die Stirnradstufe 70₃ über die ebenfalls mit der Schaltstelle 74₂ schaltbare Stirnradstufe 70₄ geleitet wird.

Zusammenfassend kann zu der zuvor beschriebenen Ausführungsform der Getriebeanordnung 30, einschließlich der Varianten, gesagt werden, dass die Gangstufen 1 bis 6 des Parallelschaltgetriebes 50 über die Hauptwelle des Gruppenschaltgetriebes 80 abgetrieben werden, die die Schaltgruppe C trägt. Außerdem können beide Ausgangswelle 58₁, 58₂ beziehungsweise die Hauptwellen 90₁, 90₂ über die Schaltstelle 88₁ antriebsmäßig verbunden werden, so dass die Gangstufen 1 bis 6 des Parallelschaltgetriebes 50 mit den Schaltgruppen A und B des Gruppenschaltgetriebes 80 geschaltet werden können.

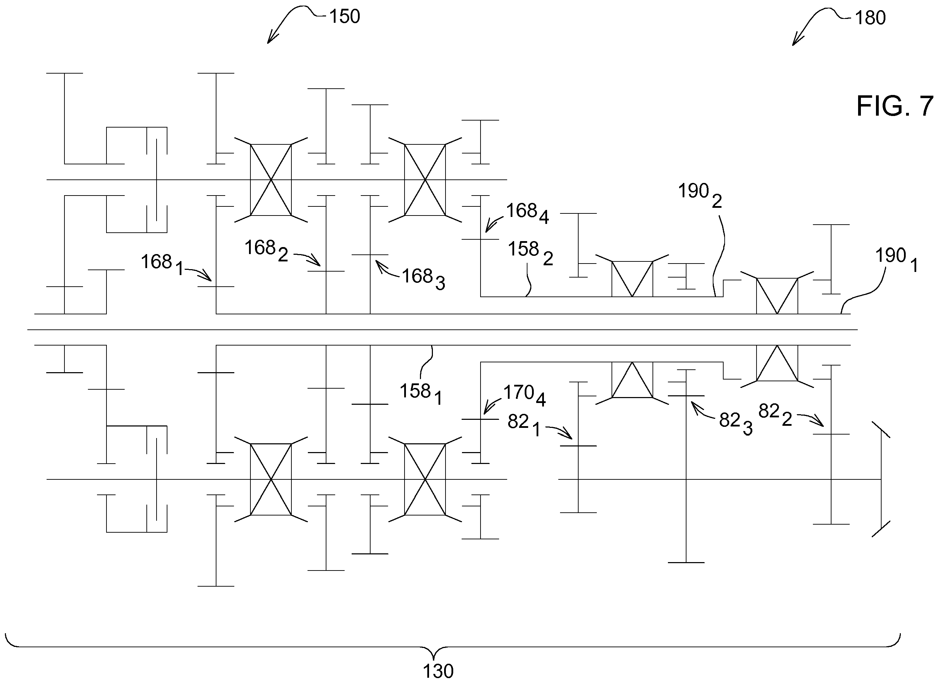

Die Figur 7 zeigt ein Strichdiagramm der Getriebeanordnung 130 in einer zweiten Ausführungsform. Auf die Darstellung dieser weiteren Ausführungsform in einem Blockschaltbild wird verzichtet. Diese Ausführungsform wird mit um 100 hochgesetzte Bezugszeichen gegenüber der zuvor beschriebenen Ausführungsform versehen. Außerdem werden nur die Unterschiede zu der zuvor beschriebenen Ausführungsform aufgeführt. Zu erkennen ist, dass lediglich die Stirnradstufen 168₄ und 170₄, das heißt die Gangstufen 1 und 2, über die äußere Abtriebswelle 158₂ in das Gruppenschaltgetriebe

### GEÄNDERTES BLATT

180 abtreiben. Die anderen Stirnradstufen 168₁ bis 168₃ und 170₁ bis 170₃ treiben über die innere Abtriebswelle 158₁ ab. Innerhalb des Gruppenschaltgetriebes sind die Schaltgruppen 82₁ und 82₃ beziehungsweise A und C der zweiten Hauptwelle 190₂ zugeordnet. Die Schaltgruppe 82₂ beziehungsweise B ist der ersten Hauptwelle 190₁ zugeordnet.

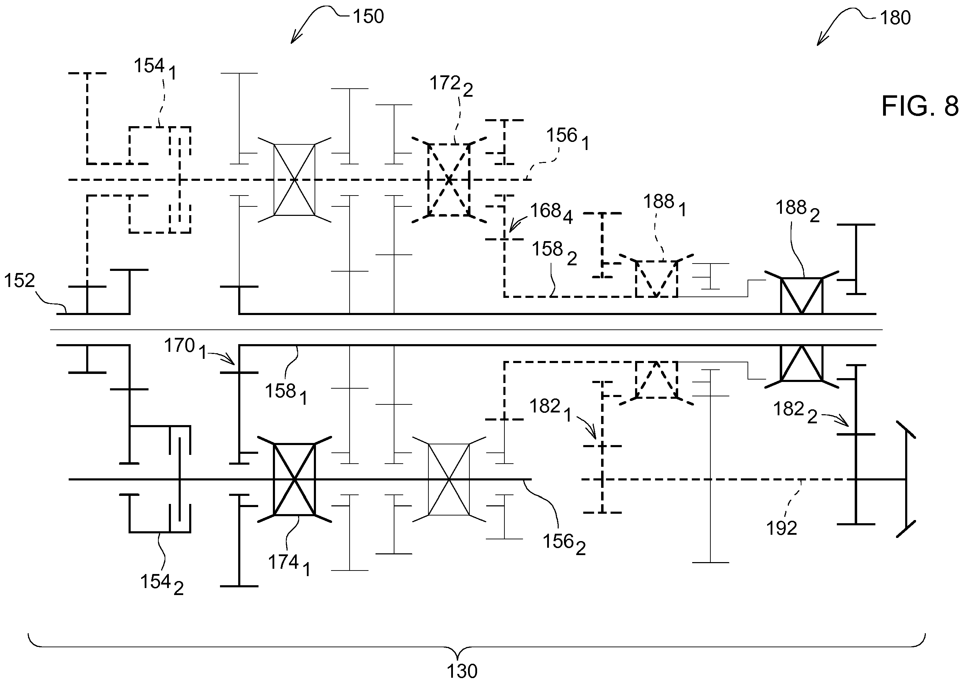

Die Figur 8 stellt eine Lastschaltung von der Übersetzung B8 in die Übersetzung C1 der zweiten Ausführungsform der Getriebeanordnung 130 dar. Da der Ablauf der Lastschaltung und die beteiligten Elemente dem im Zusammenhang mit der Figur 5 Beschriebenen entsprechen, wird an dieser Stelle abkürzend auf die Figur 5 verwiesen.

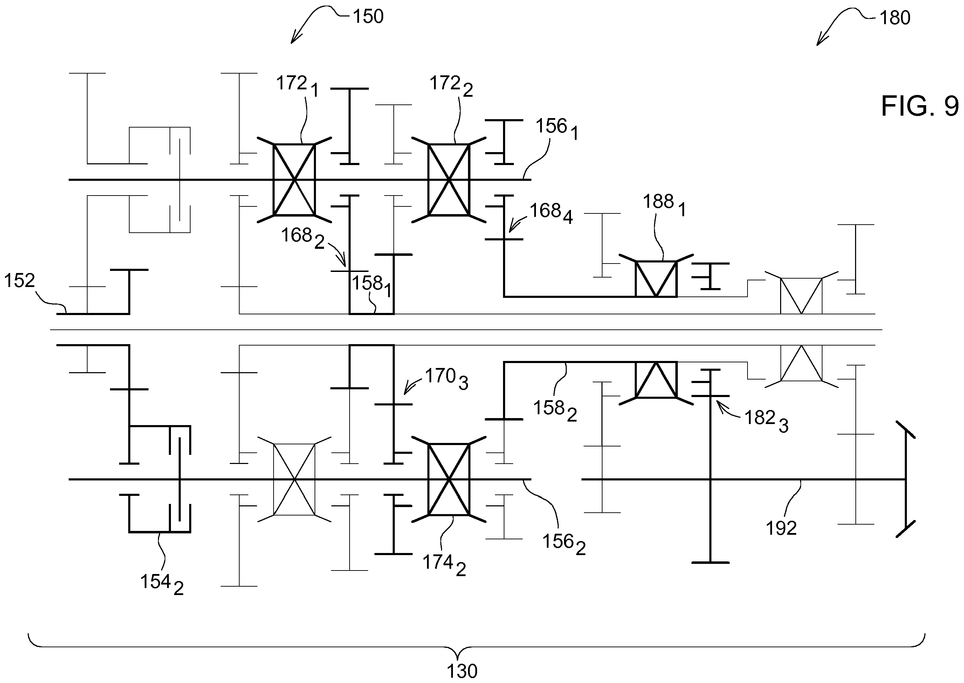

Die Figur 9 zeigt, wiederum mit dick-durchgezogenem Strich dargestellt, die Getriebeanordnung 130 mit einer eingestellten Übersetzung A0, die durch eine Windung des Kraftflusses durch das Parallelschaltgetriebe 150 zustande kommt. Der Kraftfluss verläuft von der Eingangswelle 152 über das Schaltelement 154₂ auf die Vorgelegewelle 156₂. Über die entsprechend positionierte Schaltstelle 174₂ erfolgt über die Stirnradstufe 170₃ und die Abtriebswelle 158₁ ein Antrieb der Stirnradstufe 168₂, die über die entsprechend positionierte Schaltstelle 172₁ die gegenüberliegende Vorgelegewelle 156₁ antreibt. Ausgehend von der Vorgelegewelle 156₁ verläuft der Kraftfluss über die entsprechend positionierte Schaltstelle 172₂ und über die Stirnradstufe 168₄ auf die Abtriebswelle 158₂ und weiter in das Gruppenschaltgetriebe 180. Dort besteht über die entsprechend positionierte Schaltstelle 188₁ eine Antriebsverbindung über die Schaltgruppe 182₃ beziehungsweise A auf die Abtriebswelle 192, wodurch die Übersetzung A0 eingestellt ist. Die Übersetzung A0 ist ca. 20% kürzer als die Übersetzung A1 und von der der Übersetzung A0 kann eine Lastschaltung in die Übersetzung A1 erfolgen. In Abwandlung hierzu kann die Übersetzung A0 eingestellt werden, indem der Kraftfluss in dem Parallelschaltgetriebe 150 anstatt über die Stirnradstufe 168₂ über die ebenfalls mit der Schaltstelle 172₁ schaltbare Stirnradstufe 168₁ geleitet wird. Die Übersetzung A00 ist ca. 70% kürzer als die Übersetzung A1 und von der der Übersetzung A00 kann eine Lastschaltung in die Übersetzung A1 erfolgen.

### Bezugszeichenliste

- 10: Arbeitsfahrzeug
- 12: Kabine
- 14: vordere Fahrzeugachse
- 20: Antriebsstrang
- 22: Antriebsmotor
- 26: hintere Fahrzeugachse
- 30: Getriebeanordnung
- 40: Wendegetriebe
- 50: Parallelschaltgetriebe
- 52: Eingangswelle
- 54: Schaltelement
- 56: Vorgelegewelle
- 58: Ausgangswelle
- 60: Übersetzung
- 62: Übersetzung
- 64: Schaltebene
- 66: Stirnradstufe
- 68: Stirnradstufe
- 70: Stirnradstufe
- 72: Schaltstelle
- 74: Schaltstelle
- 80: Gruppenschaltgetriebe
- 82: Schaltgruppen
- 84: Schaltstelle
- 86: Schaltstelle
- 88: Doppelschaltstelle
- 90: Hauptwelle
- 92: Abtriebswelle
- 100: Differentialgetriebe

## Patentansprüche

1. Getriebeanordnung (30), insbesondere für ein landwirtschaftliches Arbeitsfahrzeug (10), umfassend
ein Parallelschaltgetriebe (50) mit einer Eingangswelle (52), von der ausgehend eine Antriebsleistung jeweils über ein erstes und ein zweites Schaltelement (541, 542) auf jeweilige Vorgelegewellen (561, 562) verteilt werden kann, und einer ersten und einer zweiten Ausgangswelle (581, 582), wobei von jeder der Vorgelegewellen (561, 562) die Antriebsleistung bedarfsweise auf jede der Ausgangswellen (581, 582) übertragbar ist, ein Gruppenschaltgetriebe (80) mit mehreren Schaltgruppen (821, 822,...), wobei eine erste der Schaltgruppen (821) mit der ersten der Ausgangswellen (581) und eine zweite der Schaltgruppen (821) mit der zweiten der Ausgangswellen (582) antriebsverbindbar ist,
**gekennzeichnet dadurch, dass** die erste und die zweite Ausgangswelle (581, 581) koaxial zueinander angeordnet sind.

2. Getriebeanordnung (30) nach Anspruch 1, **dadurch gekennzeichnet, dass** eine erste Schaltstelle (84) mit mehreren Schaltstellungen vorgesehen ist, wobei in einer der Schaltstellungen beide Ausgangswellen (581, 582) antriebsmäßig miteinander verbunden sind.

3. Getriebeanordnung (30) nach Anspruch 2, **dadurch gekennzeichnet, dass** eine zweite Schaltstelle (86) mit mehreren Schaltstellungen vorgesehen ist, wobei in einer der Schaltstellungen eine der Schaltgruppen (821, 822,...) mit einer der Ausgangswellen (581, 582) antriebsmäßig verbunden ist.

4. Getriebeanordnung (30) nach Anspruch 3, **dadurch gekennzeichnet, dass** die erste und/oder die zweite Schaltstelle (84, 86) in dem Gruppenschaltgetriebe (80) angeordnet sind.

5. Getriebeanordnung (30) nach einem der Ansprüche 2 bis 4, **dadurch gekennzeichnet, dass** die erste und die zweite Schaltstelle (84, 86) zu einer Doppelschaltstelle (88) mit zwei Schaltstellungen zusammengefasst sind, wobei in der ersten Schaltstellung beide Ausgangswellen (581, 582) antriebsmäßig miteinander verbunden sind und in der zweiten Schaltstellung eine der Schaltgruppen (821, 822,...) mit einer der Ausgangswellen (581, 582) antriebsmäßig verbunden ist.

6. Getriebeanordnung (30) nach einem der Ansprüche 1 bis 5, **dadurch gekennzeichnet, dass** das Parallelschaltgetriebe (50) über die erste Vorgelegewelle (561) schaltbare erste Übersetzungen (601, 602,...) und über die zweite Vorgelegewelle (562) schaltbare zweite Übersetzungen (621, 622,...) aufweist, wobei eine erste Übersetzung (601, 602,..) mit einer zweiten Übersetzung (621, 622,...) jeweils in einer Schaltebene (641, 642,...) angeordnet ist und zumindest eine erste Schaltebene (641, 642,...) über die erste Ausgangswelle (581) und zumindest eine zweite Schaltebene (642, 641,...) über die zweite Ausgangswelle (582) abgetrieben wird.

7. Getriebeanordnung (30) nach einem der Ansprüche 1 bis 6, **dadurch gekennzeichnet, dass** die erste und die zweite Ausgangswelle (581, 582) jeweils mit einer ersten Hauptwelle und einer zweiten Hauptwelle (901, 902) des Gruppenschaltgetriebes (80) antriebsverbunden sind.

8. Getriebeanordnung nach Anspruch 7, **dadurch gekennzeichnet, dass** die erste und die zweite Schaltstelle (84, 86) auf einer der beiden Hauptwellen (901, 902) des Gruppenschaltgetriebes (80) angeordnet sind.

## Claims

1. Gearbox arrangement (30), in particular for an agricultural work vehicle (10), comprising a parallel-shift gearbox (50) with an input shaft (52), proceeding from which drive power can be distributed in each case by means of a first and a second shift element (541, 542) to respective countershafts (561, 562), and having a first and a second output shaft (581, 582), wherein the drive power can be transmitted from each of the countershafts (561, 562) to each of the output shafts (501, 582) as required,
a range shift gearbox (80) with multiple shift ranges (821, 822,...), wherein a first of the shift ranges (821) is connectable in terms of drive to the first of the output shafts (581) and a second of the shift ranges (821) is connectable in terms of drive to the second of the output shafts (582),
**characterized in that** the first and the second output shaft (581, 581) are arranged coaxially with respect to one another.

2. Gearbox arrangement (30) according to Claim 1, **characterized in that** a first shift point (84) with multiple shift positions is provided, wherein, in one of the shift positions, the two output shafts (581, 582) are connected to one another in terms of drive.

3. Gearbox arrangement (30) according to Claim 2, **characterized in that** a second shift point (86) with multiple shift positions is provided, wherein, in one of the shift positions, one of the shift ranges (821, 822,...) is connected in terms of drive to one of the output shafts (581, 582).

4. Gearbox arrangement (30) according to Claim 3, **characterized in that** the first and/or the second shift point (84, 86) are arranged in the range shift gearbox (80).

5. Gearbox arrangement (30) according to any of Claims 2 to 4, **characterized in that** the first and the second shift point (84, 86) are combined to form a double shift point (88) with two shift positions, wherein, in the first shift position, the two output shafts (581, 582) are connected to one another in terms of drive and, in the second shift position, one of the shift ranges (821, 822,...) is connected in terms of drive to one of the output shafts (581, 582) .

6. Gearbox arrangement (30) according to any of Claims 1 to 5, **characterized in that** the parallel-shift gearbox (50) has first gearbox ratios (601, 602,...) shiftable by means of the first countershaft (561) and has second gearbox ratios (621, 622,...) shiftable by means of the second countershaft (562), wherein a first gearbox ratio (601, 602,...) is arranged in each case in one shift plane (641, 642,...) with a second gearbox ratio (621, 622,...), and at least one first shift plane (641, 642,...) is driven by means of the first output shaft (581) and at least one second shift plane (642, 641,...) is driven by means of the second output shaft (582).

7. Gearbox arrangement (30) according to any of Claims 1 to 6, **characterized in that** the first and the second output shaft (581, 582) are connected in terms of drive in each case to a first main shaft and a second main shaft (901, 902) of the range shift gearbox (80).

8. Gearbox arrangement according to Claim 7, **characterized in that** the first and the second shift point (84, 86) are arranged on one of the two main shafts (901, 902) of the range shift gearbox (80).

## Revendications

1. Ensemble de transmissions (30), destiné en particulier à un véhicule de travail agricole (10), l'ensemble comprenant
une transmission à commutation parallèle (50) munie d'un arbre d'entrée (52), à partir duquel une puissance d'entraînement peut être distribuée par le biais d'un premier et d'un deuxième élément de commutation (541, 542) entre des arbres intermédiaires respectifs (561, 562), et d'un premier et deuxième arbre de sortie (581, 582), chacun des arbres intermédiaires (561, 562) pouvant transmettre la puissance d'entraînement à chacun des arbres de sortie (581, 582) selon les besoins,
une transmission à commutation de groupes (80) munie d'une pluralité de groupes de commutation (821, 822, ...), un premier des groupes de commutation (821) pouvant être relié en entraînement au premier des arbres de sortie (581) et un deuxième des groupes de commutation (821) pouvant être relié en entraînement au deuxième des arbres de sortie (582)
**caractérisé en ce que** les premier et deuxième arbres de sortie (581, 581) sont disposés coaxialement l'un à l'autre.

2. Ensemble de transmissions (30) selon la revendication 1, **caractérisé en ce qu'**il est prévu un premier point de commutation (84) comprenant une pluralité de positions de commutation, les deux arbres de sortie (581, 582) étant reliés en entraînement l'un à l'autre dans l'une des positions de commutation.

3. Ensemble de transmissions (30) selon la revendication 2, **caractérisé en ce qu'**il est prévu un deuxième point de commutation (86) comprenant une pluralité de positions de commutation, l'un des groupes de commutation (821, 822, ...) étant relié en entraînement, dans l'une des positions de commutation, à l'un des arbres de sortie (581, 582).

4. Ensemble de transmissions (30) selon la revendication 3, **caractérisé en ce que** le premier et/ou le deuxième point de commutation (84, 86) sont disposés dans la transmission à commutation de groupes (80).

5. Ensemble de transmissions (30) selon l'une des revendications 2 à 4, **caractérisé en ce que** le premier et le deuxième point de commutation (84, 86) sont combinés pour former un double point de commutation (88) comprenant deux positions de commutation, les deux arbres de sortie (581, 582) étant reliés en entraînement l'un à l'autre dans la première position de commutation et l'un des groupes de commutation (821, 822, ...) étant relié en entraînement à l'un des arbres de sortie (581, 582) dans la deuxième position de commutation.

6. Ensemble de transmissions (30) selon l'une des revendications 1 à 5, **caractérisé en ce que** la transmission à commutation parallèle (50) comporte des premières démultiplications (601, 602, ...) commutables par le biais du premier arbre intermédiaire (561) et des deuxièmes démultiplications (621, 622, ...) commutables par le biais du deuxième arbre intermédiaire (562), une première démultiplication (601, 602, ...) étant disposée avec une deuxième démultiplication (621, 622, ...) respectivement dans un niveau de commutation (641, 642, ...) et au moins un premier niveau de commutation (641, 642, ...) étant entraîné par le premier arbre de sortie (581) et au moins un deuxième niveau de commutation (642, 641, ...) étant entraîné par le biais du deuxième arbre de sortie (582).

7. Ensemble de transmissions (30) selon l'une des revendications 1 à 6, **caractérisé en ce que** le premier et le deuxième arbre de sortie (581, 582) sont reliés chacun en entraînement à un premier arbre principal et à un deuxième arbre principal (901, 902) de la transmission à commutation de groupes (80).

8. Ensemble de transmissions selon la revendication 7, **caractérisé en ce que** le premier et le deuxième point de commutation (84, 86) sont disposés sur l'un des deux arbres principaux (901, 902) de la transmission à commutation de groupes (80).
